# EUROPEAN PATENT SPECIFICATION

(11) **EP 2 705 940 B1**
(45) Date of publication and mention of the grant of the patent: **10.06.2020**
(21) Application number: 13183504.3
(22) Date of filing: 09.09.2013
(51) Int. Cl.: B29C 45/66, B29C 45/17, B29C 45/83, B29C 45/64

(54) **Injection molding machine**
Spritzgießmaschine
Machine de moulage à injection

(30) Priority: 11.09.2012 JP 2012199955
(43) Date of publication of application: 12.03.2014
(73) Proprietor: SUMITOMO HEAVY INDUSTRIES, LTD., Tokyo 141-6025 (JP)
(72) Inventor: Tamura, Atsuro, Chiba 263-0001 (JP); Moriya, Tomohiro, Chiba 263-0001 (JP); Shibata, Tatsuya, Chiba 263-0001 (JP); Yamaguchi, Takasue, Chiba 263-0001 (JP); Ito, Yosuke, Chiba 263-0001 (JP)
(74) Representative: Hoffmann Eitle

(56) References cited:
- EP-A1- 1 595 681
- DE-U1-202009 013 875
- JP-A- H05 345 339
- JP-A- 2002 307 514
- JP-A- 2008 246 778
- US-A- 3 597 798
- US-A- 5 135 385
- US-B1- 6 561 785
- US-B1- 6 719 553

## Description

### BACKGROUND OF THE INVENTION

### 1. Field of the Invention

The present invention relates to an injection molding machine.

### 2. Description of the Related Art

By attaching a mold unit to an injection molding machine, a molding product is manufactured by the injection molding machine by filling a cavity space of the injection molding machine with melted resin and solidifying the filled-in melted resin. The mold unit includes a stationary mold and a movable mold and the cavity space is formed between the stationary mold and the movable mold in a mold clamping operation. A mold closing operation, the mold clamping operation and a mold opening operation of the mold unit are performed by a mold clamping unit (see Patent Document 1, for example).

The injection molding machine includes a mold space adjustment unit that adjusts spaces between a plurality of members in accordance with variation in thickness (height) of the mold unit when exchanging the mold unit or the like. The mold space adjustment unit includes a rod that connects the plurality of members with spaces therebetween and an adjustable nut that is threaded with a screw portion of the rod. The adjustable nut is provided to be rotatable with respect to a predetermined member among the plurality of members and the movement of the adjustable nut with respect to the predetermined member is limited. When the adjustable nut is rotated with respect to the screw portion, the position of the predetermined member with respect to the rod is adjusted so that the spaces between the plurality of members are adjusted. There is formed a film of lubricant of the adjustable nut in order to reduce abrasion of the adjustable nut.

However, the lubricant of the adjustable nut gradually leaks outside. Thus, it is necessary to resupply the lubricant so that the film of the lubricant is not discontinuous.

### [Patent Document]

[Patent Document 1] WO 2005/090052

Another document is US 5,135,385 A1 referring to a clamping system for use in an injection molding machine. The clamping adjusting mechanism includes a piston, a cylinder head cover, a sprocket, a screw portion, a sliding key, a sprocket cover, a tie bar cover and a key way. The tie bar cover is provided so as to secure the safety in operation even when the tie bars protrude over the rear face of the fixed platen.

Another document is US 6,719,553 B1 referring to a mold-closing unit for an injection molding machine.

US 3,597,798 A relates to a two-stages clamping mechanism, wherein adjustment means are provided to vary the initial spacing between the two stationary members. A cover may be provided to enclose the adjusting mechanism and protect it from dirt and inadvertent external damage.

US 6,561,785 B1 relates to a mold clamping apparatus, wherein a nut covering member covers the fastening nut, which is rotatable together with the ball screw shaft, while oil seals prevent leakage of oil which is filled in a through-hole for lubricating the bearings.

Further documents are DE 20 2009 013875 U1 and JP 2002-307514 A.

A molding machine having a lubrication mechanism is described in EP 1 595 681 A1.

JP 2008 246 778 A refers to a mold clamping device having a first platen to which one of a pair of molds is fixed, a second platen to which the other mold is fixed and which can move forward/backward in the mold opening/ closing direction, and a rod which is fixed to the second platen and transmits mold clamping force from the opposite side of the first platen to the second platen.

Another document is JP H05 345339 A referring to a locking device for an injection molding machine.

### SUMMARY OF THE INVENTION

The present invention is made in light of the above problems, and provides an injection molding machine capable of reducing resupply of lubricant.

According to an embodiment, there is provided an injection molding machine including the features of claim 1.

Note that also arbitrary combinations of the above-described elements, and any changes of expressions in the present invention, made among methods, devices and so forth, are valid as embodiments of the present invention.

### BRIEF DESCRIPTION OF THE DRAWINGS

Other objects, features and advantages of the present invention will become more apparent from the following detailed description when read in conjunction with the accompanying drawings.
Fig. 1 is a view illustrating an injection molding machine of a first embodiment, which is not part of the invention, at a state when a mold closing operation is completed;
Fig. 2 is a view illustrating an injection molding machine of the first embodiment at a state when a mold opening operation is completed;
Fig. 3 is a view for explaining a mold space adjustment unit of the injection molding machine of the first embodiment;
Fig. 4 is a view for explaining an alternative example of the mold space adjustment unit of the injection molding machine of the first embodiment;
Fig. 5 is a view illustrating the injection molding machine of a second embodiment, which is part of the invention, at a state when a mold closing operation is completed;
Fig. 6 is a view illustrating the injection molding machine of the second embodiment at a state when a mold opening operation is completed; and
Fig. 7 is a view for explaining the mold space adjustment unit of the injection molding machine of the second embodiment.

### DETAILED DESCRIPTION OF THE PREFERRED EMBODIMENTS

The invention will be described herein with reference to illustrative embodiments. Those skilled in the art will recognize that many alternative embodiments can be accomplished using the teachings of the present invention and that the invention is not limited to the embodiments illustrated for explanatory purposes.

It is to be noted that, in the explanation of the drawings, the same components are given the same reference numerals, and explanations are not repeated.

In the following, a moving direction of a movable platen in a mold closing operation is referred to as "forward" and a moving direction of the movable platen in a mold opening operation is referred to as "backward".

### (First embodiment)

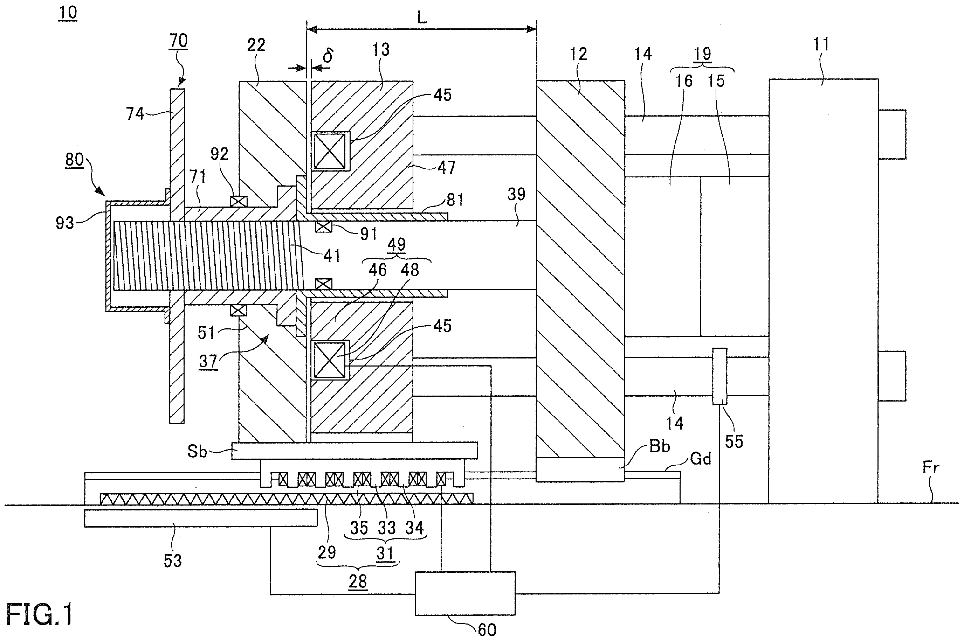

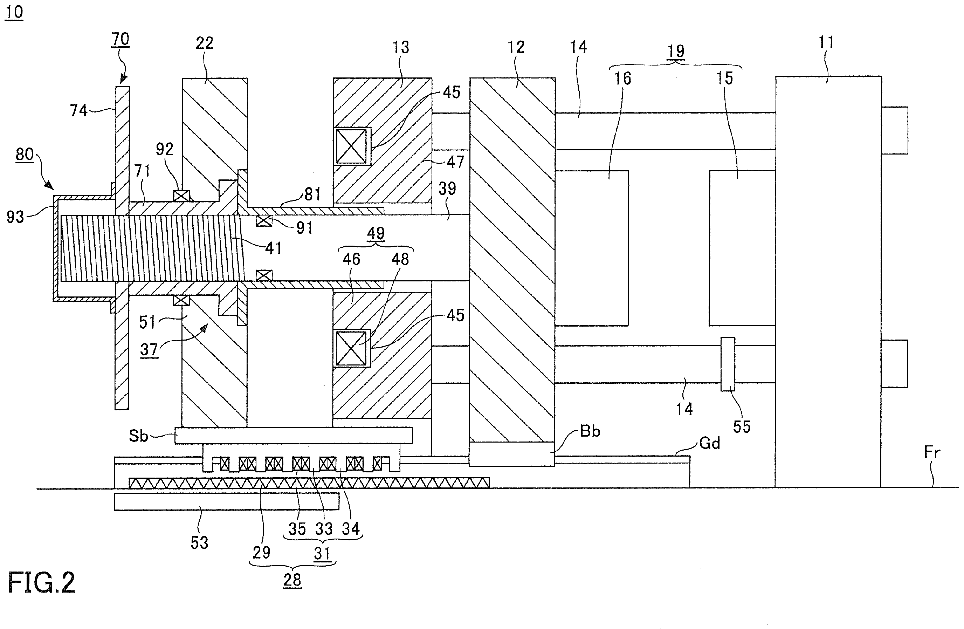

Fig. 1 and Fig. 2 are views illustrating an injection molding machine of a first embodiment. Fig. 1 illustrates a state when a mold closing operation is completed and Fig. 2 illustrates a state when a mold opening operation is completed. In Fig. 2, a controller is not shown.

An injection molding machine 10 includes a frame Fr, a stationary platen (a first stationary member) 11 mounted on the frame Fr and a rear platen (a second stationary member) 13 fixed to the frame Fr. A plurality of tie-bars 14 (four, for example) are provided to bridge between the stationary platen 11 and the rear platen 13 that extend in a forward and backward directions in the mold clamping operation. The stationary platen 11 is movable in forward and backward directions with respect to the frame Fr to permit the extension of the tie-bars 14 in the mold clamping operation.

In this embodiment, the stationary platen 11 is movable in the forward and backward directions with respect to the frame Fr while the rear platen 13 is fixed to the frame Fr. Alternatively, the stationary platen 11 may be fixed to the frame Fr and the rear platen 13 may be movable in the forward and backward directions with respect to the frame Fr.

The injection molding machine 10 further includes a movable platen (a first movable member) 12 provided between the stationary platen 11 and the rear platen 13. The movable platen 12 is fixed on a movable base Bb and the movable base Bb is movable in the forward and backward directions along a guide Gd provided on the frame Fr. With this configuration, the movable platen 12 is movable to be closer to and farther from the stationary platen 11.

A movable mold 16 is attached to the movable platen 12 at a surface facing the stationary platen 11 and a stationary mold 15 is attached to the stationary platen 11 at a surface facing the movable platen 12. The stationary mold 15 and the movable mold 16 form a mold unit 19. When the movable platen 12 is moved forward, the movable mold 16 and the stationary mold 15 contact each other so that the mold closing operation is performed. When the movable platen 12 is moved backward, the movable mold 16 and the stationary mold 15 are separated from each other so that the mold opening operation is performed.

The injection molding machine 10 further includes an attraction plate (a second movable member) 22 and a rod 39. The attraction plate 22 moves forward and backward with the movable platen 12. The rod 39 connects the movable platen 12 and the attraction plate 22 while maintaining a distance L therebetween. The rear platen 13 positioned between the attraction plate 22 and the movable platen 12 is provided with a hole at a center portion through which the rod 39 penetrates.

The attraction plate 22 is fixed to a slide base Sb and the slide base Sb is movable in the forward and backward directions along the guide Gd. With this configuration, the attraction plate 22 is movable in the forward and backward directions at a backside of the rear platen 13. The attraction plate 22 may be made of a soft magnetic material.

The injection molding machine 10 further includes a linear motor 28 as a mold closing and opening driver that moves the movable platen 12 forward and backward. The linear motor 28 is provided between the attraction plate 22, which moves forward and backward with the movable platen 12, and the frame Fr. Alternatively, the linear motor 28 may be provided between the movable platen 12 and the frame Fr.

The linear motor 28 includes a stator 29 and a mover 31. The stator 29 is formed at the frame Fr and the mover 31 is formed at a lower end of the slide base Sb.

The mover 31 includes a core 34 and coils 35. The core 34 includes a plurality of magnetic pole teeth 33 that protrude toward the stator 29. The plurality of magnetic pole teeth 33 are aligned in the forward and backward directions at a predetermined pitch. The coils 35 are wound around the magnetic pole teeth 33, respectively.

The stator 29 includes a core, not shown in the drawings, and a plurality of permanent magnets, not shown in the drawings, provided on the core. The plurality of permanent magnets are aligned in the forward and backward directions at a predetermined pitch. The magnetic poles of the mover 31 are alternately formed to be a north pole and a south pole.

When a predetermined current is supplied to the coils 35 of the mover 31, the mover 31 is moved forward and backward by an interaction of a magnetic field generated by the current flowing through the coils 35 and a magnetic field generated by the permanent magnets. With this operation, the attraction plate 22 and the movable platen 12 are also moved forward and backward so that the mold closing operation and the mold opening operation are performed. The linear motor 28 is feed-back controlled based on a detected result by a position sensor 53 that detects the position of the mover 31 so that the mover 31 is positioned at a set position. The position sensor 53 can detect the position of the attraction plate 22 and the distance between the attraction plate 22 and the rear platen 13 by detecting the position of the mover 31.

Here, in this embodiment, the permanent magnets are provided on the stator 29 while the coils 35 are provided on the mover 31. Alternatively, the coils may be provided on the stator 29 and the permanent magnets may be provided on the mover 31. In such a case, the coils are not moved in accordance with the movement of the linear motor 28. Thus, wiring to the coils to supply electric power can be easily provided.

Here, a rotary motor and a ball screw mechanism that converts a rotational motion of the rotary motor to a linear motion, a hydropneumatic cylinder (a hydraulic cylinder, for example) or the like may be used as the mold closing and opening driver instead of the linear motor 28.

The rear platen 13 includes a core 46 formed at a predetermined portion of an attraction surface (a back end surface) of the rear platen 13 and a yoke 47 formed at a portion other than the core 46. The predetermined portion may be, for example, a portion of the rear platen 13 that surrounds the rod 39.

Further, the rear platen 13 is provided with a groove 45 for housing a coil 48. The coil 48 is wound around the core 46. The core 46 is formed further inside than the groove 45. The coil 48 and the core 46 form an electromagnet 49.

The attraction plate 22 includes an attraction portion 51 that is attracted by the electromagnet 49 formed at a predetermined portion of an attraction surface (a front end surface) of the attraction plate 22. The predetermined portion may be, for example, a portion of the attraction plate 22 that surrounds the rod 39 and faces the electromagnet 49.

The rear platen 13 and the attraction plate 22 form a mold clamping force generation mechanism 37 that generates a mold clamping force by an attraction force of the electromagnet 49.

When electric power is supplied to the electromagnet 49 and the electromagnet 49 is driven, the electromagnet 49 attracts the attraction portion 51 of the attraction plate 22 and a mold clamping force is generated.

In this embodiment, the electromagnet 49 is formed separately from the rear platen 13 and the attraction portion 51 is formed separately from the attraction plate 22. Alternatively, the electromagnet may be formed as a part of the rear platen 13 and the attraction portion may be formed as a part of the attraction plate 22. The arrangements of the electromagnet and the attraction portion may be opposite. For example, the electromagnet 49 may be provided on the attraction plate 22 side and the attraction portion 51 may be provided on the rear platen 13 side. Further, there may be provided a plurality of the coils 48 for the electromagnet 49.

The injection molding machine 10 further includes a controller 60 that controls the operation of the injection molding machine 10. The controller 60 is composed of a CPU, a memory or the like, and actualizes various functions by having the CPU execute programs stored in the memory or the like.

Next, an operation of the injection molding machine 10 is explained.

At the state when the mold opening operation is completed (the state illustrated in Fig. 2), the controller 60 controls the linear motor 28 to move the movable platen 12 forward. Then, as illustrated in Fig. 1, the movable mold 16 contacts the stationary mold 15 so that the mold closing operation is completed. When the mold closing operation is completed, a predetermined gap δ is formed between the rear platen 13 and the attraction plate 22, in other words, between the electromagnet 49 and the attraction portion 51. A force necessary for the mold closing operation is sufficiently smaller than the mold clamping force.

After the mold closing operation is completed, the controller 60 controls the electromagnet 49 to generate an attraction force between the electromagnet 49 and the attraction portion 51 that face each other with the predetermined gap δ formed therebetween. The attraction force is transmitted to the movable platen 12 via the rod 39 and a mold clamping force is generated between the movable platen 12 and the stationary platen 11. A mold clamping force sensor 55 detects the mold clamping force. The mold clamping force sensor 55 may be a distortion sensor that detects the extension (distortion) of the tie-bar 14 corresponding to the mold clamping force, for example. The mold clamping force sensor 55 may be a load cell that detects a load applied to the rod 39 in accordance with the mold clamping force, and is not specifically limited. Melted resin is supplied to fill in the cavity space of the mold unit 19 at the mold clamping operation state. The filled-in melted resin is cooled and solidified to be formed into a molding product.

Thereafter, the controller 60 controls the linear motor 28 to move the movable platen 12 backward. Then, the movable mold 16 is moved backward and the mold opening operation is performed. After the mold opening operation, an ejector device, not shown in the drawings, ejects the molding product from the movable mold 16.

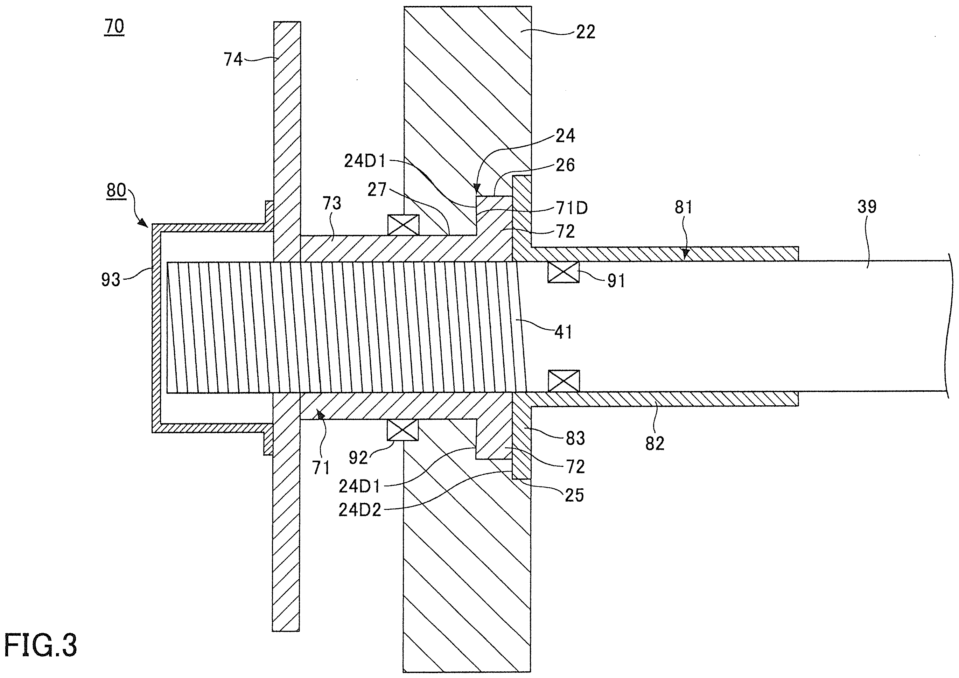

Fig. 3 is a view for explaining a mold space adjustment unit of the injection molding machine 10 of the first embodiment. The injection molding machine 10 includes a mold space adjustment unit 70 that adjusts a space L between the movable platen 12 and the attraction plate 22 in accordance with a variation of the height (thickness) of the mold unit 19 when exchanging the mold unit 19 or the like. The controller 60 controls the operation of the mold space adjustment unit 70.

The mold space adjustment unit 70 includes the rod 39 that connects the movable platen 12 and the attraction plate 22 with the space L therebetween and an adjustable nut 71 that is threaded with a screw portion 41 of the rod 39.

The adjustable nut 71 is rotatable with respect to the attraction plate 22. A relative movement of the adjustable nut 71 in the forward and backward directions with respect to the attraction plate 22 is limited. When the adjustable nut 71 is rotated with respect to the screw portion 41, the position of the attraction plate 22 with respect to the rod 39 is adjusted.

The adjustable nut 71 is provided between the attraction plate 22 and the rod 39. The adjustable nut 71 includes a larger diameter portion 72 and a smaller diameter portion 73 whose outer diameter is smaller than that of the larger diameter portion 72.

The larger diameter portion 72 of the adjustable nut 71 is provided inside the attraction plate 22. The attraction plate 22 is provided with a stepwise hole 24 composed of a larger diameter hole portion 26 that houses the larger diameter portion 72 and a smaller diameter hole portion 27 through which the smaller diameter portion 73 is inserted.

The larger diameter portion 72 of the adjustable nut 71 transmits the mold clamping force. An interface surface 24D1 of the attraction plate 22 between the larger diameter hole portion 26 and the smaller diameter hole portion 27 and a back surface 71D of the larger diameter portion 72 of the adjustable nut 71 push against each other in the mold clamping operation. The mold clamping force is transmitted from the attraction plate 22, the adjustable nut 71, the rod 39 and the movable platen 12 in this order.

As such, in this embodiment, the larger diameter portion 72 of the adjustable nut 71 is provided inside the attraction plate 22 to transmit the mold clamping force. Thus, a portion (the interface surface 24D1) of the attraction plate 22 that transmits the mold clamping force is provided at the attraction surface side of the attraction plate 22. Therefore, a rotational moment applied to the attraction plate 22 is small even when the mold clamping force becomes unbalanced due to magnetic leakage so that the attraction plate 22 is hardly inclined. Therefore, imbalance of the mold clamping force can be further suppressed. Furthermore, as the mold clamping force is directly transmitted from the attraction plate 22 to the adjustable nut 71, the number of parts that transmit the mold clamping force is smaller compared with a case when the mold clamping force is transmitted from the attraction plate to the adjustable nut via a nut hold member. Therefore, influence caused by the parts on the transmission of the mold clamping force can be reduced.

The smaller diameter portion 73 of the adjustable nut 71 protrudes backward from the attraction plate 22 and the adjusting gear 74 is fixed to a back end portion of the smaller diameter portion 73. In this embodiment, the adjusting gear 74 is formed separately from the adjustable nut 71. However, alternatively, the adjusting gear 74 may be integrally formed with the adjustable nut 71.

The adjusting gear 74 is configured to engage a drive gear that is attached to an output shaft of a mold space adjustment motor, not shown in the drawings. The adjusting gear 74 may be connected to the drive gear via a connection member such as a chain, a belt or the like.

The controller 60 controls the mold space adjustment motor to have the adjustable nut 71 rotate for a predetermined amount with respect to the screw portion 41 in accordance with the variation of the height of the mold unit 19. Then, the position of the attraction plate 22 with respect to the rod 39 is adjusted and the space L between the movable platen 12 and the attraction plate 22 is adjusted. With this configuration, the gap δ formed between the rear platen 13 and the attraction plate 22 when the mold closing operation is completed becomes an optimum value.

Here, the adjustable nut 71 is pushed toward the attraction plate 22 while being rotated when the mold space adjustment motor is driven and the space L between the movable platen 12 and the attraction plate 22 is adjusted.

For example, when the space L is to be widened, the adjustable nut 71 is relatively moved backward with respect to the screw portion 41 while being rotated to be pushed toward the attraction plate 22. At this time, the back surface 71D of the adjustable nut 71 is pushed toward the interface surface 24D1 of the attraction plate 22 between the larger diameter hole portion 26 and the smaller diameter hole portion 27 while being rotated.

Further, when the space L is to be narrowed, the adjustable nut 71 is relatively moved forward with respect to the screw portion 41 while being rotated to be pushed toward a front cover 81, which functions as a nut hold member. At this time, a front end surface of the adjustable nut 71 is pushed toward a back end surface of the front cover 81 while being rotated.

Therefore, a film of lubricant (referred to as a "lubricant film" hereinafter) is formed around the adjustable nut 71 in order to reduce the abrasion or the like of the adjustable nut 71. The lubricant film may be formed between the back surface 71D of the adjustable nut 71 and the interface surface 24D1 of the attraction plate 22 between the larger diameter hole portion 26 and the smaller diameter hole portion 27, for example. The lubricant film is further formed between the front end surface of the adjustable nut 71 and the back end surface of the front cover 81. Further, the lubricant film is formed between the adjustable nut 71 and the screw portion 41. When the lubricant film becomes discontinuous, galling may occur.

The mold space adjustment unit 70 includes a seal mechanism 80 that suppresses the leakage of the lubricant of the adjustable nut 71 toward outside. With this structure, the lubricant film can be continuous even when the lubricant is not resupplied for a long time. Thus, the resupply of the lubricant can be reduced.

The seal mechanism 80 may include a back cover (a first cover) 93 that is fixed to the adjustable nut 71. The back cover 93 suppresses the leakage of the lubricant from the back end portion of the rod 39 toward outside. The back cover 93 is fixed to the adjustable nut 71 via the adjusting gear 74, for example, and forms a sealed space at the backside of the adjustable nut 71. The back cover 93 also has a function to suppress adhesion of contaminants such as dust or the like from outside to the screw portion 41.

The seal mechanism 80 may further include the front cover 81 (a second cover), which functions as the nut hold member, that is fixed to the attraction plate 22. The front cover 81 holds the adjustable nut 71 with respect to the attraction plate 22. Thus, the adjustable nut 71 is pressed by the front cover 81 toward the attraction plate 22 such that the adjustable nut 71 is not apart from the attraction plate 22. The front cover 81 and the adjustable nut 71 are aligned along an axis direction of the rod 39. The front cover 81 presses the adjustable nut 71 from forward in the mold opening operation, for example. With this operation, the adjustable nut 71, the rod 39 and the movable platen 12 are moved backward with the attraction plate 22 when the linear motor 28 is driven to move the attraction plate 22 backward for the mold opening operation.

The front cover 81 is provided with a through-hole through which the rod 39 penetrates. The front cover 81 includes a sleeve portion 82 and a flange portion 83 provided at a back end portion of the sleeve portion 82, for example. The flange portion 83 is fixed to the attraction plate 22 by a bolt or the like.

The flange portion 83 may be housed in the stepwise hole 24 of the attraction plate 22 such that the front end surface of the flange portion 83 and the front end surface of the attraction plate 22 are positioned at the same surface. The stepwise hole 24 is composed of a flange housing hole portion 25 that houses the flange portion 83, the larger diameter hole portion 26 that houses the larger diameter portion 72 of the adjustable nut 71, and the smaller diameter hole portion 27 through which the smaller diameter portion 73 of the adjustable nut 71 is inserted in this order from the front end surface to the back end surface of the attraction plate 22. The flange housing hole portion 25 has a larger diameter than that of the larger diameter hole portion 26 and the flange portion 83 is fixed at an interface surface 24D2 between the flange housing hole portion 25 and the larger diameter hole portion 26.

The larger diameter portion 72 of the adjustable nut 71 is provided between the interface surface 24D1 of the attraction plate 22, which is between the larger diameter hole portion 26 and the smaller diameter hole portion 27, and the back end surface of the flange portion 83. Thus, the relative movement of the adjustable nut 71 with respect to the attraction plate 22 in the forward and backward directions is limited.

The front cover 81 of the embodiment is formed separately from the attraction plate 22. However, alternatively, the front cover 81 may be integrally formed with the attraction plate 22.

The seal mechanism 80 may further include first and second seal members 91 and 92 that suppress the leakage of the lubricant from members that move relative to each other when performing the mold space adjustment toward outside. For the first and second seal members 91 and 92, an oil seal, a mechanical seal, O-ring, packing or the like may be used.

The first seal member 91 is annularly formed along a circumferential direction of the rod 39 to seal a space between the outer periphery of the rod 39 and the inner periphery of the front cover 81 to reduce the leakage of the lubricant from the space toward outside. The first seal member 91 is fixed to the outer periphery of the rod 39, for example, and slidably contacts the inner periphery of the front cover 81 when performing the mold space adjustment. The front cover 81 may be formed to protrude toward the movable platen 12 side (forward) from the attraction plate 22 in order to retain an area for the first seal member 91 to slide.

Here, the arrangement of the first seal member 91 may be opposite and the first seal member 91 may be fixed to the inner periphery of the front cover 81 and may slidably contact the outer periphery of the movable platen 12 when performing the mold space adjustment. In this case, the front cover 81 may be formed to protrude toward the movable platen 12 side (forward) from the attraction plate 22 so that an area for the first seal member 91 to slide at the rod 39 does not overlap the screw portion 41 formed at the outer periphery of the rod 39.

The second seal member 92 is annularly formed along a circumferential direction of the adjustable nut 71 (the smaller diameter portion 73, in detail) to seal a space between the outer periphery of the adjustable nut 71 and the inner periphery of the attraction plate 22 to reduce the leakage of the lubricant from the space toward outside. The second seal member 92 is fixed to the inner periphery of the attraction plate 22, for example, and slidably contacts the outer periphery of the adjustable nut 71 when performing the mold space adjustment.

The arrangement of the second seal member 92 may be opposite and the second seal member 92 may be fixed to the outer periphery of the adjustable nut 71 and may slidably contact the inner periphery of the attraction plate 22 when performing the mold space adjustment.

The adjustable nut 71 of the embodiment is provided at the attraction plate 22 side, of the movable platen 12 and the attraction plate 22 that are connected with each other via the rod 39. Alternatively, the adjustable nut 71 may be provided at the movable platen 12 side, or provided at both sides.

### (Alternative example of first embodiment)

In the first embodiment, the front cover 81, which functions as the nut hold member, and the adjustable nut 71 are aligned along the axis direction of the rod 39. However, in this alternative example, the structure is different in a point that the adjustable nut is provided between the nut hold member and the rod. The different point is mainly explained in the following.

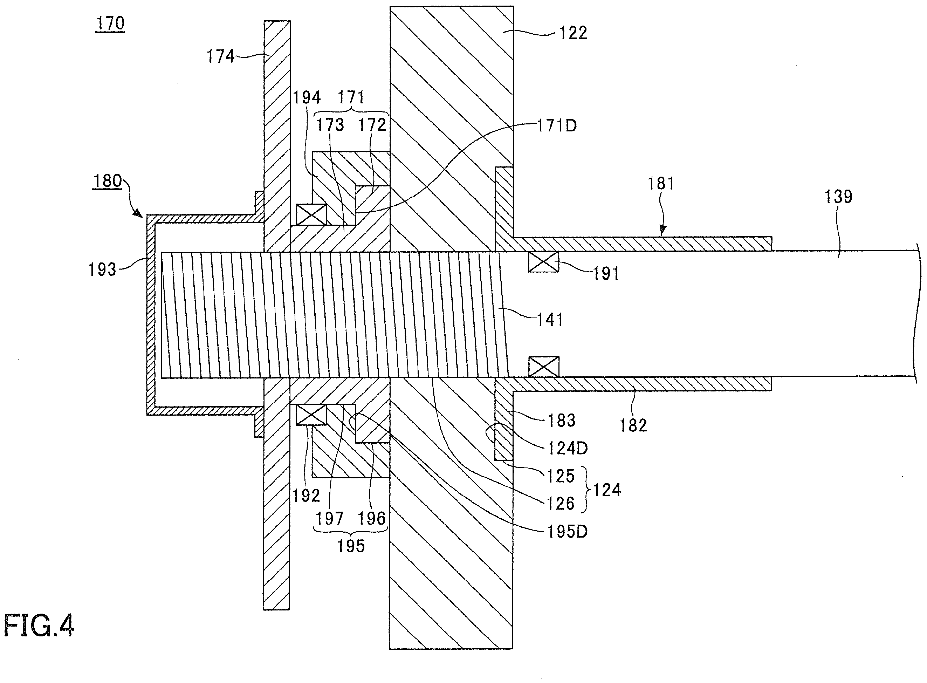

Fig. 4 is a view for explaining an alternative example of the mold space adjustment unit of the injection molding machine of the first embodiment. A mold space adjustment unit 170 illustrated in Fig. 4 is used instead of the mold space adjustment unit 70 illustrated in Fig. 3.

The mold space adjustment unit 170 includes a rod 139 that connects the movable platen 12 (see Fig. 1) and an attraction plate 122 with a space therebetween and an adjustable nut 171 that is engaged with a screw portion 141 of the rod 139. The adjustable nut 171 is rotatable with respect to the attraction plate 122. A relative movement of the adjustable nut 171 in the forward and backward directions with respect to the attraction plate 122 is limited.

The adjustable nut 171 is provided between a nut hold member 194 and the rod 139. The nut hold member 194 holds the adjustable nut 171 with respect to the attraction plate 122. Thus, the adjustable nut 171 is pressed by the nut hold member 194 toward the attraction plate 122 such that the adjustable nut 171 is not apart from the attraction plate 122. The adjustable nut 171 includes a larger diameter portion 172 and a smaller diameter portion 173 whose diameter is smaller than that of the larger diameter portion 172.

The larger diameter portion 172 of the adjustable nut 171 is provided inside the nut hold member 194. The nut hold member 194 is provided with a stepwise hole 195 composed of a larger diameter hole portion 196 that houses the larger diameter portion 172 and a smaller diameter hole portion 197 through which the smaller diameter portion 173 is inserted. The larger diameter portion 172 of the adjustable nut 171 is provided between an interface surface 195D, which is between the larger diameter hole portion 196 and the smaller diameter hole portion 197, and a back end surface of the attraction plate 122. The relative movement of the adjustable nut 171 with respect to the attraction plate 122 in the forward and backward directions is limited.

The nut hold member 194 holds the adjustable nut 171 from backside in the mold closing operation or in the mold clamping operation, for example. The interface surface 195D of the nut hold member 194 at the inner periphery and a front surface 171D of the adjustable nut 171 at the outer periphery push against each other in the mold clamping operation. The mold clamping force is transmitted from the attraction plate 122, the nut hold member 194, the adjustable nut 171, the rod 139 and the movable platen 12 in this order.

The smaller diameter portion 173 of the adjustable nut 171 protrudes backward from the nut hold member 194 and an adjusting gear 174 is fixed to a back end portion of the smaller diameter portion 173. The adjusting gear 174 of the embodiment is formed separately from the adjustable nut 171. However, alternatively, the adjusting gear 174 may be integrally formed with the adjustable nut 171.

The adjusting gear 174 is configured to engage a drive gear that is attached to an output shaft of a mold space adjustment motor, not shown in the drawings. The adjusting gear 174 may be connected to the drive gear via a connection member such as a chain, a belt or the like.

When the mold space adjustment motor is driven and the adjustable nut 171 is rotated for a predetermined amount with respect to the screw portion 141 in accordance with the variation of the height of the mold unit, the position of the attraction plate 122 with respect to the rod 139 is adjusted and the space between the movable platen 12 and the attraction plate 122 is adjusted. Thus, a gap formed between the rear platen 13 and the attraction plate 122 when the mold closing operation is completed becomes an optimum value.

Here, a lubricant film is formed around the adjustable nut 171 in order to reduce abrasion of the adjustable nut 171 or the like.

The mold space adjustment unit 170 includes a seal mechanism 180 that suppresses the leakage of the lubricant of the adjustable nut 171 toward outside. With this structure, the lubricant film can be continuous even when the lubricant is not resupplied for a long time. Thus, the resupply of the lubricant can be reduced.

The seal mechanism 180 may include a back cover (a first cover) 193 that is fixed to the adjustable nut 171. The back cover 193 suppresses the leakage of the lubricant from the back end portion of the rod 139 toward outside. The back cover 193 is fixed to the adjustable nut 171 via the adjusting gear 174, for example, and forms a sealed space at the backside of the adjustable nut 171. The back cover 193 also has a function to suppress adhesion of contaminants such as dust or the like from outside to the screw portion 141.

The seal mechanism 180 may further include a front cover (a second cover) 181 that is fixed to the attraction plate 122. The front cover 181 is provided with a through-hole through which the rod 139 penetrates. The front cover 181 includes a sleeve portion 182 and a flange portion 183 provided at a back end portion of the sleeve portion 182, for example.

The flange portion 183 is fixed to the attraction plate 122 by a bolt or the like. The flange portion 183 may be housed in a stepwise hole 124 of the attraction plate 122 such that a front end surface of the flange portion 183 and a front end surface of the attraction plate 122 are positioned at the same surface. The stepwise hole 124 is composed of a flange housing hole portion 125 that houses the flange portion 183 and a smaller diameter hole portion 126 whose diameter is smaller than the flange housing hole portion 125 in this order from the front end surface to the back end surface of the attraction plate 122. The flange portion 183 is fixed to an interface surface 124D between the flange housing hole portion 125 and the smaller diameter hole portion 126.

The seal mechanism 180 may further include first and second seal members 191 and 192 that suppress the leakage of the lubricant from members that move relative to each other when performing the mold space adjustment toward outside. For the first and second seal members 191 and 192, an oil seal, a mechanical seal, O-ring, packing or the like may be used.

The first seal member 191 is annularly formed along a circumferential direction of the rod 139 to seal a space between the outer periphery of the rod 139 and the inner periphery of the front cover 181 to reduce the leakage of the lubricant from the space toward outside. The first seal member 191 is fixed to the outer periphery of the rod 139, for example, and slidably contacts the inner periphery of the front cover 181 when performing the mold space adjustment. The front cover 181 may be formed to protrude toward the movable platen 12 side (forward) from the attraction plate 122 in order to retain an area for the first seal member 191 to slide.

Here, the arrangement of the first seal member 191 may be opposite and the first seal member 191 may be fixed to the inner periphery of the front cover 181 and may slidably contact the outer periphery of the rod 139 when performing the mold space adjustment. At this time, the front cover 181 may be formed to protrude toward the movable platen 12 side (forward) from the attraction plate 122 so that an area for the first seal member 91 to slide at the rod 139 does not overlap the screw portion 141 formed at the outer periphery of the rod 139.

In this embodiment, the first seal member 191 is provided that seals the space between the inner periphery of the front cover 181 and the outer periphery of the rod 139. However, alternatively, a seal member that seals a space between the inner periphery of the through-hole (stepwise hole 124) provided in the attraction plate 122 through which the rod 139 penetrates and the outer periphery of the rod 139 may be provided. This seal member may be provided with the first seal member 191. The seal member may be provided such that the seal member and the screw portion 141 do not contact when performing the mold space adjustment.

The second seal member 192 is annularly formed along a circumferential direction of the adjustable nut 171 (the smaller diameter portion 173, in detail) to seal a space between the outer periphery of the adjustable nut 171 and the inner periphery of the nut hold member 194 to reduce the leakage of the lubricant from the space toward the outside. The second seal member 192 is fixed to the inner periphery of the nut hold member 194, for example, and slidably contacts the outer periphery of the adjustable nut 171 when performing the mold space adjustment.

The arrangement of the second seal member 192 may be opposite and the second seal member 192 may be fixed to the outer periphery of the adjustable nut 171 and may slidably contact the inner periphery of the nut hold member 194 when performing the mold space adjustment.

The adjustable nut 171 of the example is provided at the attraction plate 122 side, of the movable platen 12 and the attraction plate 122 that are connected to each other via the rod 139. Alternatively, the adjustable nut 171 may be provided at the movable platen 12 side, or provided at both sides.

### (Second embodiment)

In the above described first embodiment and its alternative example, the mold space adjustment unit is configured to adjust the space between the movable platen and the attraction plate.

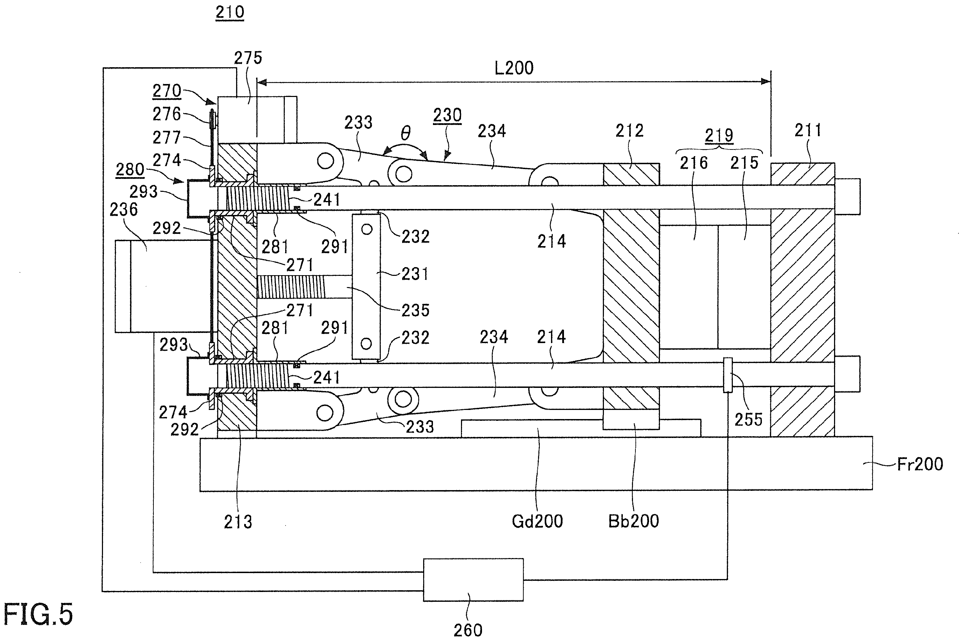

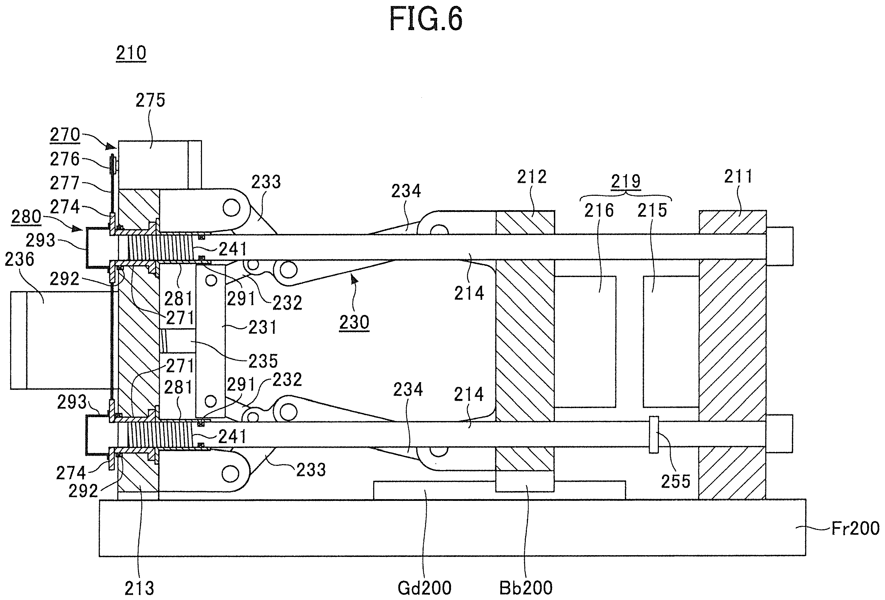

However, in this embodiment, the mold space adjustment unit is configured to adjust a space between the stationary platen and a toggle support. Fig. 5 and Fig. 6 are views illustrating the injection molding machine of a second embodiment. Fig. 5 illustrates a state when a mold closing operation is completed and Fig. 6 illustrates a state when a mold opening operation is completed. In Fig. 6, a controller is not shown.

An injection molding machine 210 includes a frame Fr200, a stationary platen 211 fixed to the frame Fr200 and a toggle support 213 provided at a space L200 from the stationary platen 211. The stationary platen 211 and the toggle support 213 are connected via a plurality of (four, for example) tie-bars 214. The toggle support 213 is movable in the forward and backward directions with respect to the frame Fr200 to permit the extension of the tie-bars 214 in the mold clamping operation and to enable the adjustment of the mold space.

In this embodiment, the stationary platen 211 is fixed to the frame Fr200 while the toggle support 213 is mounted on the frame Fr200 in a movable manner in the forward and backward directions. Alternatively, the toggle support 213 may be fixed to the frame Fr200 and the stationary platen 211 may be mounted on the frame Fr200 in a movable manner in the forward and backward directions.

The injection molding machine 210 further includes a movable platen 212 provided to face the stationary platen 211. The movable platen 212 is fixed on a movable base Bb200 and the movable base Bb200 is movable in the forward and backward directions along a guide Gd200 provided at the frame Fr200. With this configuration, the movable platen 212 is movable to be closer to and farther from the stationary platen 211.

A movable mold 216 is attached to the movable platen 212 at a surface facing the stationary platen 211 and a stationary mold 215 is attached to the stationary platen 211 at a surface facing the movable platen 212. The stationary mold 215 and the movable mold 216 form a mold unit 219. When the movable platen 212 is moved forward, the movable mold 216 and the stationary mold 215 contact each other so that the mold closing operation is performed. When the movable platen 212 is moved backward, the movable mold 216 and the stationary mold 215 are separated from each other so that the mold opening operation is performed.

The injection molding machine 210 further includes a toggle mechanism 230 provided between the movable platen 212 and the toggle support 213 and a mold clamping operation motor 236 that drives the toggle mechanism 230. The mold clamping operation motor 236 includes a ball screw mechanism as a motion converter that converts a rotational motion to a linear motion and drives the toggle mechanism 230 by moving a drive shaft 235 backward and forward.

The toggle mechanism 230 includes, for example, a crosshead 231 that is movable in a direction parallel to a mold closing and opening direction, a first toggle lever 232 that is oscillatably attached to the crosshead 231, a second toggle lever 233 that is oscillatably attached to the toggle support 213 and a toggle arm 234 that is oscillatably attached to the movable platen 212. The first toggle lever 232 and the second toggle lever 233, and the second toggle lever 233 and the toggle arm 234 are connected via pins, respectively. The toggle mechanism 230 illustrated in Fig. 5 is a so-called 5-joint, internally folding double toggle mechanism. Alternatively, various structures may be adopted and an externally folding toggle mechanism or a 4-joint toggle mechanism may be used.

The injection molding machine 210 further includes a controller 260 that controls the operation of the injection molding machine 210. The controller 260 is composed of a CPU, a memory or the like, and actualizes various functions by having the CPU execute programs stored in the memory or the like.

Next, an operation of the injection molding machine 210 is explained.

At the state when the mold opening operation is completed (the state illustrated in Fig. 6), the controller 260 controls a mold clamping operation motor 236 to move a drive shaft 235 forward to drive the toggle mechanism 230. Then, as illustrated in Fig. 5, the movable platen 212 is moved forward so that the movable mold 216 and the stationary mold 215 contact each other and the mold closing operation is completed.

Subsequently, when the controller 260 controls the mold clamping operation motor 236 to further drive in a forward direction, the toggle mechanism 230 generates a mold clamping force which is obtained by performing a toggle magnification of a driving force generated by the mold clamping operation motor 236. The mold clamping force is detected by a mold clamping force sensor 255. The mold clamping force sensor 255 may be a distortion sensor that detects the extension (distortion) of the tie-bar 214 corresponding to the mold clamping force. Melted resin is supplied to fill in the cavity space of the mold unit 219 at the mold clamping operation state. The filled-in melted resin is cooled and solidified to be formed into a molding product.

Thereafter, the controller 260 controls the mold clamping operation motor 236 to drive in an opposite direction so that the drive shaft 235 is moved backward and the toggle mechanism 230 is driven. Then, the movable platen 212 is moved backward to perform the mold opening operation. After the mold opening operation, an ejector device, not shown in the drawings, ejects the molding product from the movable mold.

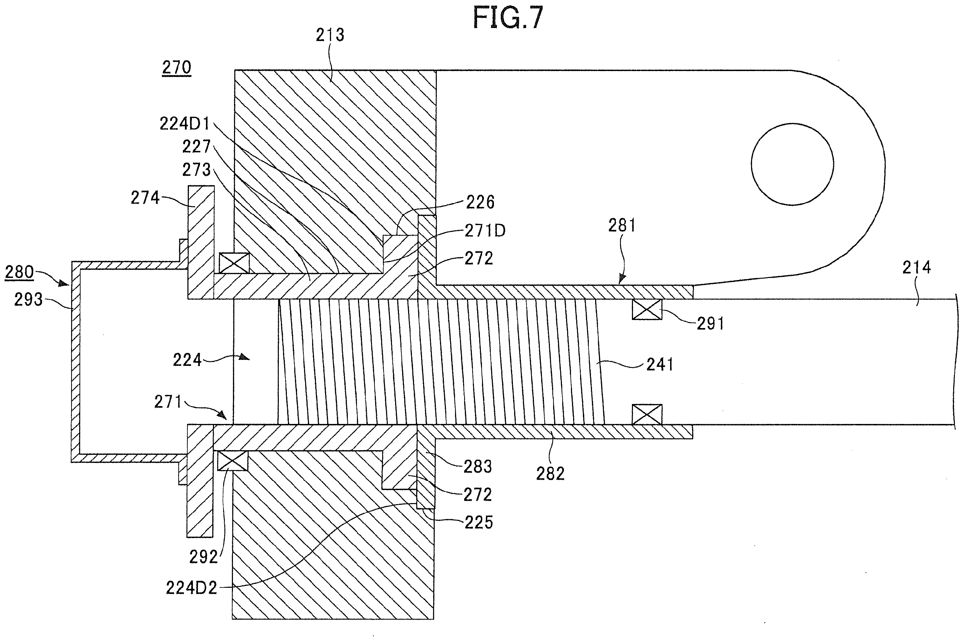

Fig. 7 is a view for explaining a mold space adjustment unit of the injection molding machine of the second embodiment. The injection molding machine 210 includes a mold space adjustment unit 270 that adjusts the space L200 between the stationary platen 211 and the toggle support 213 in accordance with the variation of the height (thickness) of the mold unit 219 when exchanging the mold unit 219 or the like. The controller 260 controls the operation of the mold space adjustment unit 270.

The mold space adjustment unit 270 includes the tie-bars 214 as rods that connect the stationary platen 211 and the toggle support 213 with the space L200 therebetween and an adjustable nut 271 that is threaded with screw portions 241 of each of the tie-bars 214. A plurality of the adjustable nuts 271 are provided for the plurality of the tie-bars 214, respectively. However, one of the adjustable nuts 271 is explained in the following.

The adjustable nut 271 is rotatable with respect to the toggle support 213. A relative movement of the adjustable nut 271 in the forward and backward directions with respect to the toggle support 213 is limited. When the adjustable nut 271 is rotated with respect to the screw portion 241, the position of the toggle support 213 with respect to the tie-bar 214 is adjusted.

The adjustable nut 271 is provided between the toggle support 213 and the tie-bar 214. The adjustable nut 271 includes a larger diameter portion 272 and a smaller diameter portion 273 whose diameter is smaller than that of the larger diameter portion 272.

The larger diameter portion 272 of the adjustable nut 271 is provided inside the toggle support 213. The toggle support 213 is provided with a stepwise hole 224 composed of a larger diameter hole portion 226 that houses the larger diameter portion 272 of the adjustable nut 271 and a smaller diameter hole portion 227 through which the smaller diameter portion 273 of the adjustable nut 271 is inserted.

The smaller diameter portion 273 of the adjustable nut 271 protrudes backward from the toggle support 213 and an adjusting gear 274 is fixed to a back end portion of the smaller diameter portion 273. In this embodiment, the adjusting gear 274 is formed separately from the adjustable nut 271. However, alternatively, the adjusting gear 274 may be integrally formed with the adjustable nut 271.

The adjusting gear 274 is configured to be connected with a drive gear 276 attached to an output shaft of the mold space adjustment motor 275 via a connection member 277 such as a chain, a belt or the like. The connection member 277 is hung around the drive gear 276 and the plurality of the adjusting gears 274 to synchronously rotate the plurality of adjustable nuts 271.

The controller 260 controls the mold space adjustment motor 275 to have the adjustable nut 271 rotate for a predetermined amount with respect to the screw portion 241 in accordance with the variation of the height of the mold unit 219. Then, the position of the toggle support 213 with respect to the tie-bar 214 is adjusted and the space L200 between the stationary platen 211 and the toggle support 213 is adjusted. Thus, an angle θ between the second toggle lever 233 and the toggle arm 234 becomes an optimum value when the mold closing operation is completed.

Here, the adjustable nut 271 is pushed toward the toggle support 213 or the like while being rotated when the mold space adjustment motor 275 is driven and the space L200 between the stationary platen 211 and the toggle support 213 is adjusted.

For example, when the space L200 is to be widened, the adjustable nut 271 is relatively moved backward with respect to the screw portion 241 while being rotated to be pushed toward the toggle support 213. At this time, an interface surface 271D of the adjustable nut 271 at the outer periphery is pushed toward an interface surface 224D1 of the toggle support 213 between the larger diameter hole portion 226 and the smaller diameter hole portion 227.

Further, when the space L200 is to be narrowed, the adjustable nut 271 is relatively moved forward with respect to the screw portion 241 while being rotated to be pushed toward a front cover 281, which functions as a nut hold member. At this time, the front end surface of the adjustable nut 271 is pushed toward a back end surface of the front cover 281 while being rotated.

Therefore, a lubricant film is provided around the adjustable nut 271 in order to reduce abrasion or the like of the adjustable nut 271. The lubricant film is formed between the interface surface 271D of the adjustable nut 271 at the outer periphery and the interface surface 224D1 of the toggle support 213 between the larger diameter hole portion 226 and the smaller diameter hole portion 227, for example. Further, the lubricant film is formed between a front end surface of the adjustable nut 271 and the back end surface of the front cover 281. Further, the lubricant film is formed between the adjustable nut 271 and the screw portion 241. When the lubricant film is not continuous, galling may occur.

The mold space adjustment unit 270 includes a seal mechanism 280 that suppresses the leakage of the lubricant of the adjustable nut 271 toward outside. With this structure, the lubricant film can be continuous even when the lubricant is not resupplied for a long time. Thus, the resupply of the lubricant can be reduced.

The seal mechanism 280 includes a back cover 293 that is fixed to the adjustable nut 271. The back cover 293 suppresses the leakage of the lubricant from the back end portion of the tie-bar 214 toward outside. The back cover 293 is fixed to the adjustable nut 271 via the adjusting gear 274, for example, and forms a sealed space at the backside of the adjustable nut 271. The back cover 293 also has a function to suppress adhesion of contaminants such as dust or the like from outside to the screw portion 241.

The seal mechanism 280 further includes the front cover 281, as a nut hold member that is fixed to the toggle support 213. The front cover 281 holds the adjustable nut 271 with respect to the toggle support 213. Thus, the adjustable nut 271 is pressed by the front cover 281 toward the toggle support 213 such that the adjustable nut 271 is not apart from the toggle support 213. The front cover 281 presses the adjustable nut 271 from forward in the mold clamping operation, for example.

The front cover 281 is provided with a through-hole through which the tie-bar 214 penetrates. The front cover 281 includes a sleeve portion 282 and a flange portion 283 provided at a back end portion of the sleeve portion 282, for example. The flange portion 283 is fixed to the toggle support 213 by a bolt or the like.

The flange portion 283 may be housed in the stepwise hole 224 of the toggle support 213 such that the front end surface of the flange portion 283 and the front end surface of the toggle support 213 are positioned at the same surface. The stepwise hole 224 is composed of a flange housing hole portion 225 that houses the flange portion 283, a larger diameter hole portion 226 that houses the larger diameter portion 272 of the adjustable nut 271 and the smaller diameter hole portion 227 through which the smaller diameter portion 273 of the adjustable nut 271 is inserted in this order from the front end surface to the back end surface of the toggle support 213. The flange housing hole portion 225 has a larger diameter than that of the larger diameter hole portion 226 and the flange portion 283 is fixed to at an interface surface 224D2 between the flange housing hole portion 225 and the larger diameter hole portion 226.

The larger diameter portion 272 of the adjustable nut 271 is provided between the interface surface 224D1, that is between the larger diameter hole portion 226 and the smaller diameter hole portion 227, and the back end surface of the flange portion 283. Thus, the relative movement of the adjustable nut 271 with respect to the toggle support 213 in the forward and backward directions is limited.

The front cover 281 of the embodiment is formed separately from the toggle support 213. However, alternatively, the front cover 281 may be integrally formed with the toggle support 213.

The seal mechanism 280 may further include first and second seal members 291 and 292 that suppress the leakage of the lubricant from members that move relative to each other toward outside, as illustrated in Fig. 7. For the first and second seal members 291 and 292, an oil seal, a mechanical seal, O-ring, packing or the like may be used.

The first seal member 291 is annularly formed along the circumferential direction of the tie-bar 214 to seal a space between the outer periphery of the tie-bar 214 and the inner periphery of the front cover 281 to reduce the leakage of the lubricant from the space toward outside. The first seal member 291 is fixed to the outer periphery of the tie-bar 214, for example, and slidably contacts the inner periphery of the front cover 281 when performing the mold space adjustment. The front cover 281 may be formed to protrude toward the stationary platen 211 side (forward) from the toggle support 213 in order to retain an area for the first seal member 291 to slide.

Here, the arrangement of the first seal member 291 may be opposite and the first seal member 291 may be fixed to the inner periphery of the front cover 281 and may slidably contact the outer periphery of the tie-bar 214 when performing the mold space adjustment. At this time, the front cover 281 may be formed to protrude toward the stationary platen 211 side (forward) from the tie-bar 214 so that an area for the first seal member 291 to slide does not overlap the screw portion 241 formed at the outer periphery of the tie-bar 214.

The second seal member 292 is annularly formed along a circumferential direction of the adjustable nut 271 (the smaller diameter portion 273, in detail) to seal a space between the outer periphery of the adjustable nut 271 and the inner periphery of the toggle support 213 to reduce the leakage of the lubricant from the space toward the outside. The second seal member 292 is fixed to the inner periphery of the toggle support 213, for example, and slidably contacts the outer periphery of the adjustable nut 271 when performing the mold space adjustment.

The arrangement of the second seal member 292 may be opposite and the second seal member 292 may be fixed to the outer periphery of the adjustable nut 271 and may slidably contact the inner periphery of the toggle support 213 when performing the mold space adjustment.

The adjustable nut 271 of the embodiment is provided at the toggle support 213 side, of the stationary platen 211 and the toggle support 213 that are connected to each other via the tie-bar 214. Alternatively, the adjustable nut 281 may be provided at the stationary platen 211 side, or provided at both sides.

Further, the adjustable nut 271 and the nut hold member 281 of the embodiment are aligned along an axis direction of the tie-bar 214. However, alternatively, similar to the alternative example of the first embodiment, the adjustable nut may be provided between the nut hold member and the tie-bar.

According to the embodiment an injection molding machine capable of reducing resupply of lubricant is provided.

Although a preferred embodiment of the injection molding machine has been specifically illustrated and described, it is to be understood that minor modifications may be made therein without departing from the scope of the invention as defined by the claims.

## Claims

1. An injection molding machine comprising:
a rod (214) that connects a stationary platen (211) and a toggle support (213) with a space (L, L200) therebetween;
an adjustable nut (271) that is threaded with a screw portion of the rod and adjusts the space; and
a seal mechanism (280) that suppresses leakage of lubricant of the adjustable nut toward outside, **characterized in that**
the seal mechanism includes
a first cover (293) that is fixed with respect to the adjustable nut and suppresses the leakage of the lubricant from an end portion of the rod toward outside,
a nut hold member (281) that is fixed to a predetermined member among the stationary platen (211) and the toggle support (213) and holds the adjustable nut with respect to the predetermined member such that the adjustable nut is not apart from the predetermined member,
a second cover (281) that is fixed to a predetermined member among the stationary platen (211) and the toggle support (213) and is provided with a through-hole through which the rod penetrates, and
a seal member (291) that suppresses the leakage of the lubricant between the second cover and the rod.

2. The injection molding machine according to claim 1, wherein the adjustable nut and the nut hold member are aligned along an axis direction of the rod.

3. The injection molding machine according to claim 2, wherein the seal mechanism includes a seal member (213) that suppresses the leakage of the lubricant between the adjustable nut and the predetermined member.

4. The injection molding machine according to claim 1, wherein the adjustable nut is provided between the nut hold member and the rod.

5. The injection molding machine according to claim 4, wherein the seal mechanism includes a seal member (192) that suppresses the leakage of the lubricant between the adjustable nut and the nut hold member.

6. The injection molding machine according to claim 4 or 5,
wherein the predetermined member is provided with a through-hole through which the rod penetrates, and
wherein the seal mechanism includes a seal member that suppresses the leakage of the lubricant between the predetermined member and the rod.

## Patentansprüche

1. Spritzgießmaschine, umfassend:
eine Stange (214), die eine stationäre Aufspannplatte (211) und einen Kniehebelträger (213) mit einem Zwischenraum (L, L200) dazwischen verbindet;
eine einstellbare Mutter (271), die mit einem Schraubenabschnitt der Stange mit Gewinde versehen ist und den Zwischenraum einstellt; und
einen Dichtungsmechanismus (280), der das Austreten von Schmiermittel aus der einstellbaren Mutter nach außen unterdrückt,
**dadurch gekennzeichnet, dass**
der Dichtungsmechanismus beinhaltet
eine erste Abdeckung (293), die in Bezug auf die einstellbare Mutter fixiert ist und das Austreten des Schmiermittels aus einem Endabschnitt der Stange nach außen unterdrückt,
ein Mutterhalteelement (281), das an einem aus der stationären Aufspannplatte (211) und dem Kniehebelträger (213) vorbestimmten Element fixiert ist und die einstellbare Mutter in Bezug auf das vorbestimmte Element hält, so dass die einstellbare Mutter nicht von dem vorbestimmten Element getrennt ist,
eine zweite Abdeckung (281), die an einem aus der stationären Aufspannplatte (211) und dem Kniehebelträger (213) vorbestimmten Element befestigt ist und mit einem Durchgangsloch versehen ist, durch das die Stange eindringt, und
ein Dichtungselement (291), welches das Austreten des Schmiermittels zwischen der zweiten Abdeckung und der Stange unterdrückt.

2. Spritzgießmaschine nach Anspruch 1, wobei die einstellbare Mutter und das Mutterhalteelement entlang einer Achsenrichtung der Stange ausgerichtet sind.

3. Spritzgießmaschine nach Anspruch 2, wobei der Dichtungsmechanismus ein Dichtungselement (213) beinhaltet, welches das Austreten des Schmiermittels zwischen der einstellbaren Mutter und dem vorbestimmten Element unterdrückt.

4. Spritzgießmaschine nach Anspruch 1, wobei die einstellbare Mutter zwischen dem Mutterhalteelement und der Stange vorgesehen ist.

5. Spritzgießmaschine nach Anspruch 4, wobei der Dichtungsmechanismus ein Dichtungselement (192) beinhaltet, welches das Austreten des Schmiermittels zwischen der einstellbaren Mutter und dem Mutterhalteelement unterdrückt.

6. Spritzgießmaschine nach Anspruch 4 oder 5,
wobei das vorbestimmte Element mit einem Durchgangsloch versehen ist, durch das die Stange eindringt, und
wobei der Dichtungsmechanismus ein Dichtungselement beinhaltet, welches das Austreten des Schmiermittels zwischen dem vorbestimmten Element und der Stange unterdrückt.

## Revendications

1. Machine de moulage par injection comprenant :
une tige (214) qui relie un plateau fixe (211) et un support à bascule (213) avec un espace (L, L200) entre ceux-ci ;
un écrou réglable (271) qui est fileté avec une partie de vis de la tige et ajuste l'espace ; et
un mécanisme d'étanchéité (280) qui empêche la fuite d'un lubrifiant de l'écrou réglable vers l'extérieur,
**caractérisée en ce que**
le mécanisme d'étanchéité inclut
un premier couvercle (293) qui est fixé par rapport à l'écrou réglable et empêche la fuite du lubrifiant depuis une partie d'extrémité de la tige vers l'extérieur,
un élément de maintien d'écrou (281) qui est fixé à un élément prédéterminé parmi le plateau fixe (211) et le support à bascule (213) et maintient l'écrou réglable par rapport à l'élément prédéterminé de telle sorte que l'écrou réglable ne soit pas séparé de l'élément prédéterminé,
un second couvercle (281) qui est fixé à un élément prédéterminé parmi le plateau fixe (211) et le support à bascule (213) et est pourvu d'un trou traversant à travers lequel la tige pénètre, et
un élément d'étanchéité (291) qui empêche la fuite du lubrifiant entre le second couvercle et la tige.

2. Machine de moulage par injection selon la revendication 1, dans laquelle l'écrou réglable et l'élément de maintien d'écrou sont alignés le long d'une direction d'axe de la tige.

3. Machine de moulage par injection selon la revendication 2, dans laquelle le mécanisme d'étanchéité inclut un élément d'étanchéité (213) qui empêche la fuite du lubrifiant entre l'écrou réglable et l'élément prédéterminé.

4. Machine de moulage par injection selon la revendication 1, dans laquelle l'écrou réglable est disposé entre l'élément de maintien d'écrou et la tige.

5. Machine de moulage par injection selon la revendication 4, dans laquelle le mécanisme d'étanchéité inclut un élément d'étanchéité (192) qui empêche la fuite du lubrifiant entre l'écrou réglable et l'élément de maintien d'écrou.

6. Machine de moulage par injection selon la revendication 4 ou 5,
dans laquelle l'élément prédéterminé est pourvu d'un trou traversant à travers lequel la tige pénètre, et
dans laquelle le mécanisme d'étanchéité inclut un élément d'étanchéité qui empêche la fuite du lubrifiant entre l'élément prédéterminé et la tige.
